(19) Europäisches Patentamt
European Patent Office
Office européen des brevets

(11) **EP 1 174 688 B1**

(12) **EUROPÄISCHE PATENTSCHRIFT**

(45) Veröffentlichungstag und Bekanntmachung des Hinweises auf die Patenterteilung:
**10.11.2010 Patentblatt 2010/45**

(51) Int Cl.:
***G01D 21/00*** *(2006.01)*

(21) Anmeldenummer: **01116691.5**

(22) Anmeldetag: **17.07.2001**

(54) **Sensorsystem und Verfahren zur Ermittlung von Systemzuständen**

Sensor system and method for establishling system parameters

Système des capteurs et methode d'établissement des paramètres

(84) Benannte Vertragsstaaten:
**AT BE CH CY DE DK ES FI FR GB GR IE IT LI LU MC NL PT SE TR**

(30) Priorität: **18.07.2000 DE 10035281**

(43) Veröffentlichungstag der Anmeldung:
**23.01.2002 Patentblatt 2002/04**

(73) Patentinhaber: **EADS Deutschland GmbH**
**81663 München (DE)**

(72) Erfinder:
• **Kerzendorf, Werner, Dr.**
**80997 München (DE)**
• **Köhler, Thomas, Dr.**
**81739 München (DE)**
• **Langmeier, Andreas, Dr.**
**80634 München (DE)**
• **Lohmiller, Winfried, Dr.**
**80636 München (DE)**

(56) Entgegenhaltungen:
**US-A- 5 663 891 US-A- 5 971 095**

EP 1 174 688 B1

**Beschreibung**

Die Erfindung betrifft ein Sensorsystem und ein Verfahren zur Ermittlung von Systemzuständen, im folgenden Zustände genannt.

Bei Systemen, deren Zustandsgrössen mittels zumindest eines Sensors eines Sensorsystems mit einer zugeordneten Recheneinheit zu erfassen sind, ist die möglichst genaue Bestimmung derselben aus zumindest einer Meßgröße je Zeitpunkt von großer Bedeutung für die Funktionsfähigkeit des Systems. Dies gilt insbesondere für sicherheitskritische Systeme, beispielsweise Luftdatensysteme eines Flugzeugs, da bei nicht ausreichender Genauigkeit der Meßgrössen weitere Maßnahmen, wie z.B. weitere Sensoren, erforderlich sind, um die geforderte Sicherheit des Gesamtsystems zu erreichen. Weitere Beispiele finden sich bei der Bestimmung von Zuständen bei chemischen und nuklearen Reaktionen oder in der Navigation bei der Bestimmung der Position aus mehreren Steckenmessungen wie GPS oder Radar. Die Patentschrift US-A-5 663 891 beschreibt ein Verfahren in welchem gleichzeitig mit Hilfe einer Kostenfunktion mehrere Leistungskriterien optimiert werden. Bei Systemen mit Sensorsystem mit zumindest einem Sensor und diesem zugeordneten Recheneinheit zur Ermittlung zumindest einer Zustandsgröße des Systems sind Verfahren bekannt, die über die Invertierung einer eindimensionalen Kalibrierkurve eines Sensors dem Meßwert des Sensors gegebenenfalls in Abhängigkeit weiterer Parameter des Systems eine bestimmte Zustandsgröße zuordnet. Beispielsweise erfolgt bei einem Luftdatensystem eines Flugzeugs die Messung des momentanen Flugzeug-Zustands mittels Luftdaten-Sensoren, die z.B. statische und dynamische Drücke in der Nähe des Flugzeug-Rumpfes messen. Über die eindimensionale Invertierung der zuvor bestimmten Kalibrierungen der Messung in Abhängigkeit eines Zustandes, also z.B. eine Druckmessung in Abhängigkeit des statischen Druckes, werden aus diesen Meßgrössen Zustandsgrössen der ungestörten Strömung, wie z.B. Strömungswinkel, Machzahl, Höhe und dynamischer Druck, ermittelt.

Nachteilig an diesem Verfahren ist, daß die eindimensionale Invertierung von mehrdimensionalen Kalibrierungen nur eine ungenaue Ermittlung der Zustände zuläßt. Auch können Stabilitätsprobleme auftreten.

Es wurde deshalb ein Verfahren für ein Luftdatensystem entwickelt, bei dem mit Hilfe einer Kostenfunktion $\chi^2$ ($\mathbf{x}, \mathbf{y}, \mathbf{u}$), die Kalibrier-Kurven oder -Flächen umfaßt, eine Bestimmung der momentanen Zustandsgrössen $\mathbf{x}$ des Systems aus zumindest einem Sensorsignal vorgenommen wird, um die Genauigkeit und Zuverlässigkeit der zu bestimmenden Zustände $\mathbf{x}$ zu optimieren. Dieses Verfahren ist beispielsweise in (Friehmelt H., Jost M., Flush Air Data System-Fortschrittliches Luftdatensystem für die Luft- und Raumfahrt, DGLR Jahrestagung 1999, Berlin, Vortrag 99-180, Seite 5) veröffentlicht. Bei diesem Verfahren werden Kalibrierkurven oder -flächen des Sensorsignals $\mathbf{y}$, der allgemein ein Vektor ist, und von den gesuchten Zustandsgrössen $\mathbf{x}$ und bekannten Konfigurationen bzw. Reglereingaben $\mathbf{u}$ abhängt ver-wendet.

Bei dem Luftdatensystem, für das dieses Verfahren vorgeschlagen ist, stellt $\mathbf{x}$ die Luftdaten $\alpha$, $\beta$, $q_c$ und $p_s$, $\mathbf{y}$ die Druckmessungen, d.h. die Meßgrössen, und $\mathbf{u}$ Flugzeugkonfigurationen, also systemabhängige Parameter, dar.

Zur Bestimmung der momentanen Zustandsgrössen $\mathbf{x}$ ist in dem vorgeschlagenen Luftdatensystem eine Mi-nimierung der Kostenfunktion $\chi^2(\mathbf{x}, \mathbf{y}, \mathbf{u})$ mittels eines Gradientenabstiegsverfahrens vorgesehen. Die Kostenfunktion $\chi^2(\mathbf{x_o}, \mathbf{y}, \mathbf{u})$ wird ausgehend von einer zufällig gewählten Anfangsinitialisierung $\mathbf{x_o}$ des Zustandes durch eine rekursive Variation von $\mathbf{x}$ entlang des Gradienten von $\chi^2$ so lange erniedrigt bis ein lokales Minimum von $\chi^2$ bezüglich $\mathbf{x}$ erreicht wird.

Nachteilig an diesem Verfahren ist, daß mehrere Iterationszyklen zum Erreichen des globalen Minimums notwendig sind, wodurch die Rechenzeit des Systems erhöht wird. Auch ist nachteilig, daß das Erreichen eines globalen Minimums von $\chi^2$ nicht garantiert werden kann. Das beschriebene Verfahren ist insbesondere in solchen Fällen nachteilig, bei denen die Kalibrierflächen sehr zerklüftet sein können. Dies tritt bei einem Luftdatensystem z.B. in der Transonik auf.

Es ist daher die Aufgabe der Erfindung, ein Verfahren zur Implementierung in einem Meßsystem sowie ein Meßsystem bereitzustellen, welches die Bestimmung des Zustandswertes aus einem Meßwert weiter optimiert und garantiert.

Diese Aufgabe wird mit den Merkmalen der unabhängigen Ansprüche gelöst. Weitere Ausführungsformen sind in den Unteransprüchen angegeben.

Im folgenden wird die Erfindung anhand der beiliegenden Figuren beschrieben, die zeigen:

- Figur 1 eine schematische Darstellung eines Systems mit einem Sensorsystem, für das das erfindungsgemäße Verfahren vorgesehen ist,

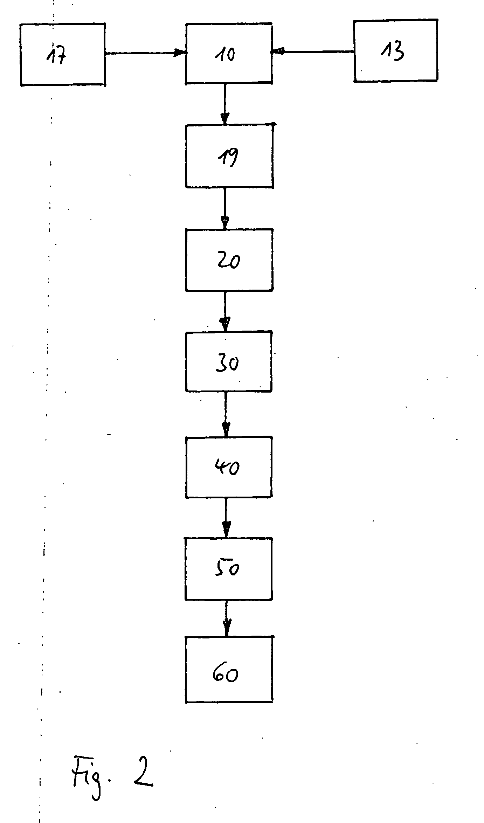

- Figur 2 eine Darstellung einer Abfolge des erfindungsgemäßen Verfahrens.

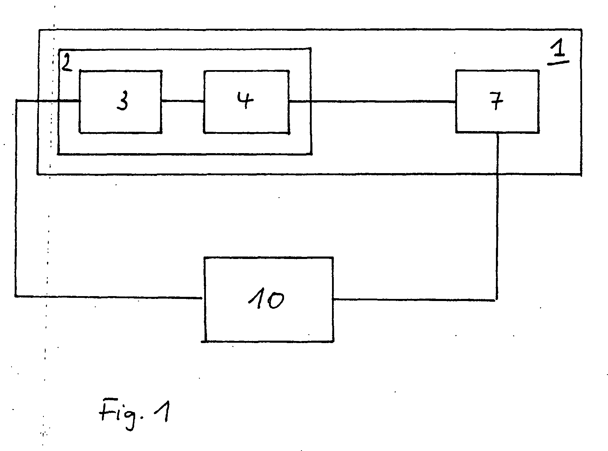

Das in der Figur 1 dargestellte System 1 weist ein Sensorsystem 2 mit zumindest einem Sensor 3 und einer Recheneinheit 4 auf. Der Sensor 3 liefert zumindest einen Meßwert, aus dem die Recheneinheit 4 eine oder mehrere Zustandsgrössen ermittelt. In der Recheneinheit 4 ist das erfindungsgemäße Verfahren implementiert und kann zusätzlich eine Regelungsvorrichtung zur Regelung von Zuständen bzw. Zustandsgrössen des Systems 1 umfassen. Die Recheneinheit 4 erstellt Stellsignale oder Kommandos für eine Stelleinheit 7 zur Veränderung zumindest einer Zustandsgrösse des Systems 1. Eine Änderung des Systemzustands, die mit dem Bezugszeichen 10 bezeichnet ist, wird wiederum von dem zumindest einen Sensor 3 erfaßt.

Das System 1 kann für eine Vielzahl von Anwendungen vorgesehen sein, z.B. die Ermittlung von Zustandsgrössen eines Flugzeugs aus Druckmessungen, die Bestimmung von Konzentrationen oder Temperaturen bei chemischen Prozessen, die Ortsfindung in der Navigation durch Vergleich verschiedener GPS oder Radar Abstandsmessungen oder die Bestimmung von Deformationen und Kräften in der Strukturmechanik.

In der Recheneinheit 4 sind zur Durchführung des erfindungsgemäßen Verfahrens Kalibrier-Flächen oder -Kurven zur Verwendung in einer Kostenfunktion abgespeichert, die mit Hilfe von Versuchen ermittelt worden sind und die einen funktionalen Zusammenhang darstellt, mit dem aus zumindest einer Zustandsgröße Meß- oder Sensor-Werte bestimmt werden.

Die Kostenfunktion $\chi^2(\mathbf{x}, \mathbf{y}, \mathbf{u})$ wird in einem Verfahrensschritt 10 vorzugsweise in der Recheneinheit 4 in einer Weise gebildet, so daß sie die Abweichung eines tatsächlichen Meßwerts von den Kalibrierkurven oder- flächen, im folgenden kurz Kalibrierungen genannt, in Abhängigkeit des unbekannten Zustands angibt. Dabei kann die Kostenfunktion eine Gewichtung einer Abweichung des Meßwerts von der Kalibrierung durch die Meßwert- bzw. Kalibriergenauigkeit enthalten. Die verwendeten Größen $\mathbf{x}, \mathbf{y}$ und $\mathbf{u}$ sind vorzugsweise vektorielle Größen.

Für ein Luftdatensystems eines Flugzeugs kann die Kostenfunktion beispielsweise in folgender Form vorliegen:

$$\chi^2 = [\mathbf{y} - (c_p q_c + p_s)]^T \, [Cov(c_p)q_c{}^2 + \sigma_p{}^2]^{-1} \, [\mathbf{y} - (c_p \, q_c + p_s)]$$

Dabei sind $\mathbf{y}$ die Druckmessungen, $c_p(\mathbf{x}, \mathbf{u})$ zuvor bestimmte Kalibrier-Kurven oder -Flächen in Form eines funktionalen Zusammenhangs und $Cov(cp)(\mathbf{x}, \mathbf{u})$ zuvor bestimmte Genauigkeiten der Kalibrierflächen. Der Zustand x wird aus den Luftdaten $\alpha$, $\beta$, $q_c$ und $p_s$ gebildet und $\sigma_p$ beschreibt die Druckwandlergenauigkeit der Druck-Öffnungen.

Für das erfindungsgemäße Verfahren für jegliche Anwendung ist ein entsprechender funktionaler Zusammenhang zwischen Meßgrößen und Systemzuständen in einer Speichereinheit abgelegt und wird zusammen mit den Systemparametern $\mathbf{u}$ in einem Schritt 13 zur Bildung der Kostenfunktion der Recheneinheit 14 zugeführt. Weiterhin wird der Recheneinheit die jeweilige Messung 17 zugeführt. Diese Kostenfunktion ist für jede Messung $\mathbf{y}$, also z.B. in jedem Zeitschritt, neu zu erstellen, da sie abhängt von den jeweiligen Meßwerten $\mathbf{y}$ und gegebenenfalls dem jeweils relevanten SystemParameter $\mathbf{u}$.

Für jede Kostenfunktion einer Messung wird das Minimum der Kostenfunktion wie folgt ermittelt:

Vorzugsweise ist vor Ablauf des erfindungsgemäßen Verfahrens bzw. im System 1 eine Approximationsfunktion der Kostenfunktion festgelegt, die so beschaffen ist, daß Minima derselben ermittelt werden können. Alternativ können während des erfindungsgemäßen Verfahrens auch mehrere Approximationsfunktionen in verschiedenen Zustandsbereichen zur Auswahl stehen, die in einem Schritt 19 ausgewählt werden. In einem Schritt 20 wird die Approximationsfunktion auf der Basis der festgelegten Funktionsart für vorzugsweise vor Ablauf des Verfahrens festgelegte Approximationsbereiche aufgestellt. Die Festlegung der Approximatonsbereiche hängt von der Kostenfunktion und der ausgewählten Approximationsfunktion sowie einem maximal tolerierbaren Fehler über den gesamten relevanten Zustandsbereich ab. Die Summe der Approximations-Bereiche decken dabei den gesamten relevanten Zustandsbereich ab. Dabei kann auch nur ein Approximationsbereich für den gesamten relevanten Zustandsbereich vorgesehen sein.

Wenn alternativ die Festlegung der Approximations-Bereiche im Verlauf des erfindungsgemäßen Verfahrens bzw. im System 1 erfolgt, werden die Approximations-Bereiche innerhalb des Zustandsbereichs $\mathbf{x}$ in einem Schritt 30 angepaßt. Dies geschieht mit rekursiven Verfahren, wobei beispielsweise eine weitere zur Verfügung stehende Approximationsfunktion verwendet wird oder der Approximations-Bereich reduziert wird. Dabei können die Ansätze der bekannten Verfahren der neuronalen Netze zugrunde gelegt werden.

Die Anzahl der bei der Minimum-Bestimmung verwendeten Approximations-Bereiche kann auch bei der Verwendung von speziellen, z.B. quadratischen Approximationsfunktionen reduziert werden, wenn ausgeschlossen werden kann, daß in einigen Approximations-Bereichen kein Minimum vorliegen kann.

In allen Approximations-Bereichen, in denen sich Minima befinden können, werden dann in einem Schritt 40 alle Minima in diesen Approximations-Bereichen bestimmt.

Sofern dabei im relevanten Zustandsbereich mehrere lokale Minima ermittelt worden sind, erfolgt in einem Schritt 50 eine Bestimmung des globalen Minimums aus dem Vergleich der lokalen Minima in einer Zustands-Bestimmung 25. Dabei wird durch einen Vergleich der Kostenfunktionen $\chi^2(\mathbf{x})$ aller lokalen Minima $\mathbf{x}$ über alle Approximations-Bereiche das globale Minimum von $\chi^2(\mathbf{x})$ identifiziert. Die nachfolgende Zustands-Bestimmung 60 ermittelt dann die dem jeweiligen Meßwert zugehörige Zustandsgrösse **x.** Im Beispiel der Lufdatenmessung ist das Ergebnis dieser Minimierung der gesuchte Luftdatenvektor **x** mit den Luftdaten $\alpha$, $\beta$, $q_c$ und $p_s$.

Vorzugsweise liegt bei dem erfindungsgemäßen Verfahren die Approximationsfunktion sowie die Einteilung der Kostenfunktion in Approximations-Bereiche fest. Entsprechende funktionale Vorkehrungen können in der Recheneinheit 4 zur Verfügung stehen.

Wenn bekannt ist, daß eine spezielle verwendete Approximationsfunktion in einem Approximations-Bereich nur ein einziges Minimum haben kann, ist zur Ermittlung des lokalen Minimums in einem Approximations-Bereich ein Gradientenverfahren mit Hilfe eines beliebigen oder aufgrund einer Abschätzung festgelegten Startvektors im jeweiligen Approximations-Bereich vorteilhaft. Alternativ kann auch ein Halbierungsverfahren oder ein vergleichbares Verfahren angewendet werden.

Bei entsprechenden Approximations-Funktionen, bei denen auch mehrere Minima in dem relevanten Approximations-Bereich des betreffenden Gitterpunktes vorliegen können, können erfindungsgemäß analytische Verfahren zur Minimum-Bestimmung verwendet werden. Z.B. erlaubt eine quadratische Approximations-Funktion der Kostenfunktion die analytische Bestimmung des Minimums der Kostenfunktion in jeweiligen Approximations-Bereich. Ähnliche analytische Bestimmungen von Minima sind auch mit Cosinus und Sinus Approximationsfunktionen möglich.

Ausgehend von einem beliebigen Startvektor $\mathbf{x}_o$ in dem jeweiligen Approximations-Bereich kann das Minimum dann gebildet werden durch die Summe des Startvektors $\mathbf{x}_o$ und einer gewichteten Differenz des Meßwerts von der Kalibrierung in Abhängigkeit des Startvektors. Konkret kann dies für das Beispiel eines Luftdatensystems mit folgendem Rechenschritt erfolgen:

$$\mathbf{x} = \mathbf{x}_o + \mathbf{P}\,\mathbf{H}\,\mathbf{R}^{-1}(\mathbf{x}_o)[\mathbf{y} - (c_p(\mathbf{x}_o)q_{c0} + p_{so})]$$

Zur Erläuterung dieses Lösungsschritts wird ausgeführt:

Die Kovarianz Cov(**y**) einer geeigneten Anzahl von Druckmessungen **y** als Maßzahl der Genauigkeit ergibt sich aus der Lösung der Kostenfunktion im Schritt 10:

$$\mathbf{R}(\mathbf{x}_o) = \text{Cov}(\mathbf{y}) = q_c^2\,\text{Cov}(c_p)(\mathbf{x}_o) + \sigma_p^2$$

In einem weiteren Schritt ergibt sich die Jacobimatrix der Druckmessungen durch:

$$\mathbf{H}(\mathbf{x}_o) = d\mathbf{y}/d\mathbf{x}(\mathbf{x}_o) \text{ von dem Druckmodell } \mathbf{y} = q_c\,c_p(\mathbf{x}) + p_s$$

Weiterhin ist die Kovarianz bzw. Genauigkeit der Luftdaten x bestimmbar durch:

$$\mathbf{P}(\mathbf{x}_o) = \text{Cov}(\mathbf{x}) = (\mathbf{H}^T\mathbf{R}^{-1}\mathbf{H})^{-1}$$

Daraus ergibt sich der angegebene Lösungsschritt für das erfindungsgemäße Verfahren zur Berechnung des lokalen Miniums aus dem Startvektor:

$$\mathbf{x} = \mathbf{x}_o + \mathbf{P}\,\mathbf{H}\,\mathbf{R}^{-1}(\mathbf{x}_o)[\mathbf{y} - (c_p(\mathbf{x}_o)q_{c0} + p_{so})]$$

Um Rechenzeit zu sparen, kann der Term **P H R**$^{-1}(\mathbf{x}_o)$ und die Kalibrierfläche $c_p(\mathbf{x}_o)$ in Form einer Tabelle abgelegt sein.

4

**Patentansprüche**

1. Verfahren zur Ermittlung eines Zustands x aus zumindest einem Sensor-Wert mit Hilfe einer für einen Messwert y erstellten Kostenfunktion zur Implementierung in einer Recheneinheit eines Sensorsystems mit zumindest einem Sensor, wobei die Kostenfunktion vom jeweiligen zu bestimmenden Zustand x abhängt und die Abweichung eines tatsächlichen Messwerts von den Kalibrierungen in Abhängigkeit des Zustands **x** angibt, um aus dessen Minimum den gesuchten Zustand **x** zu ermitteln,
   **dadurch gekennzeichnet,**
   **dass** eine Kostenfunktion aufgestellt wird, die die Abweichungen eines tatsächlichen Messwertes von den Kalibrierfunktionen in Abhängigkeit des gesuchten Zustandes x angibt,
   **dass** für zumindest eine Kostenfunktion eine Approximations-Funktion der Kostenfunktion, die die Abweichung eines tatsächlichen Messwertes von Kalibrierfunktionen in Abhängigkeit des gesuchten Zustands x angibt, eine Auswahl von Approximations-Bereichen festgelegt wird, wobei die Summe der Approximations-Bereiche den gesamten relevanten Zustandsbereich abdeckt,
   **dass** in der Auswahl von Approximations-Bereichen alle lokalen Minima der zumindest einen vorbestimmten Approximations-Funktion der Kostenfunktion innerhalb des Zustandsbereichs des Zustands x bestimmt werden, und dass eine Bestimmung des globalen Minimums aus dem Vergleich der lokalen Minima erfolgt.

2. Verfahren zur Ermittlung eines Zustands x aus zumindest einem Sensor-Wert nach dem Anspruch 1,
   **dadurch gekennzeichnet, dass**
   zur Ermittlung des Minimums der Kostenfunktion eine Bestimmung aller Minima in jedem Approximations-Bereich erfolgt.

3. Verfahren zur Ermittlung eines Zustands x aus zumindest einem Sensor-Wert nach dem Anspruch 1,
   **dadurch gekennzeichnet, dass**
   eine quadratische Approximation der Kostenfunktion erfolgt und zur Ermittlung des Minimums der Kostenfunktion in einer Auswahl von entsprechend festgelegten Approximations-Bereichen die Minima in jedem Approximations-Bereich zu ermöglichen, wobei eine Bestimmung des lokalen Minimums auf der Basis der quadratischen Approximationsfunktion erfolgt und jedes lokale Minimum **x** in der Nachbarschaft der ausgewählten Gitterpunkte ausgehend von einem Startvektor $x_0$ bestimmt wird durch die Summe des jeweiligen Startvektors $x_0$ und einer gewichteten Differenz des Messwerts von der Kalibrierung in Abhängigkeit des Startvektors.

**Claims**

1. Method for determining a state x from at least one sensor value with the aid of a cost function, created for a measured value y, for implementation in an arithmetic logic unit of a sensor system having at least one sensor, the cost function depending on the respective state x to be determined and specifying the deviation of an actual measured value from the calibrations as a function of the state x in order to determine the targeted state x from the minimum thereof,
   **characterized**
   **in that** a cost function which specifies the deviations of an actual measured value from the calibration functions as a function of the targeted state x is set up,
   **in that** for at least one cost function an approximation function of the cost function which specifies the deviation of an actual measured value from calibration functions as a function of the targeted state x is set up and a selection of approximation regions is determined, the sum of the approximation regions covering the entire relevant state region,
   **in that** in the selection of approximation regions all local minima of the at least one predetermined approximation function of the cost function are determined within the state region of the state x, and in that the global minimum is ascertained from the comparison of the local minima.

2. Method for determining a state x from at least one sensor value according to Claim 1,
   **characterized**
   **in that** all the minima in each approximation region are ascertained in order to determine the minimum of the cost function.

3. Method for determining a state x from at least one sensor value according to Claim 1,
   **characterized**
   **in that** a quadratic approximation of the cost function is performed in order to render it possible in a selection of appropriately defined approximation regions to determine the minimum of the cost function in each approximation region, the local minimum being ascertained on the basis of the quadratic approximation function and, proceeding from a start vector $x_0$, each local minimum x in the vicinity of the selected grid points being determined by the sum of the respective start vector $x_0$ and a weighted difference of the measured value for the calibration as a function of the start vector.

**Revendications**

1. Procédé de détermination d'un état x à partir d'au moins une valeur de capteur à l'aide d'une fonction de coût créée pour une valeur mesurée y en vue de sa mise en oeuvre dans une unité de calcul d'un système de détection comprenant au moins un capteur, la fonction de coût dépendant de l'état x qui est à chaque fois à déterminer et indiquant l'écart entre une valeur mesurée réelle et les étalonnages en fonction de l'état x afin de déterminer l'état x recherché à partir de son minimum,
**caractérisé en ce**
**qu'**une fonction de coût est établie, laquelle indique les écarts entre une valeur mesurée réelle et les fonctions d'étalonnage en fonction de l'état x recherché,
**que** pour au moins une fonction de coût, une fonction d'approximation de la fonction de coût, laquelle indique l'écart entre une valeur mesurée réelle et les fonctions d'étalonnage en fonction de l'état x recherché, est établie et une sélection de plages d'approximation est définie, la somme des plages d'approximation couvrant la totalité de la plage d'états pertinente,
**que** dans la sélection des plages d'approximation sont définis tous les minimums locaux de l'au moins une fonction d'approximation prédéfinie de la fonction de coût à l'intérieur de la plage d'états de l'état x et qu'une détermination du minimum global est effectuée à partir de la comparaison des minimums locaux.

2. Procédé de détermination d'un état x à partir d'au moins une valeur de capteur selon la revendication 1, **caractérisé en ce qu'**une détermination de tous les minimums dans chaque plage d'approximation est effectuée pour déterminer le minimum de la fonction de coût.

3. Procédé de détermination d'un état x à partir d'au moins une valeur de capteur selon la revendication 1, **caractérisé en ce qu'**une approximation quadratique de la fonction de coût est effectuée pour permettre de déterminer le minimum de la fonction de coût dans une sélection de plages d'approximation définies dans chaque plage d'approximation, une détermination du minimum local étant effectuée sur la base de la fonction d'approximation quadratique et chaque minimum local x étant déterminé dans le voisinage des points de grille sélectionnés à partir d'un vecteur de départ $x_0$ par la somme du vecteur de départ $x_0$ correspondant et d'une différence pondérée entre la valeur mesurée et l'étalonnage en fonction du vecteur de départ.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5663891 A

**In der Beschreibung aufgeführte Nicht-Patentliteratur**

- Flush Air Data System-Fortschrittliches Luftdatensystem für die Luft- und Raumfahrt. **Friehmelt H. ; Jost M.** DGLR Jahrestagung. 1999, vol. 99-180, 5